# EUROPÄISCHE PATENTSCHRIFT

(11) **EP 0 819 558 B1**
(45) Veröffentlichungstag und Bekanntmachung des Hinweises auf die Patenterteilung: **06.06.2001**
(21) Anmeldenummer: 97104497.9
(22) Anmeldetag: 17.03.1997
(51) Int. Cl.: B60J 7/12

(54) **Cabriolet-Fahrzeug mit einem Faltverdeck**
Convertible vehicle with a foldable top
Véhicule convertible avec capote pliante

(30) Priorität: 16.07.1996 DE 29612336 U
(43) Veröffentlichungstag der Anmeldung: 21.01.1998
(73) Patentinhaber: Wilhelm Karmann GmbH, D-49084 Osnabrück (DE)
(72) Erfinder: Rothe, Karl, 49565 Bramsche (DE); Maass, Joachim, 49143 Bissendorf (DE); Eichholz, Stefan, 49076 Osnabrück (DE)
(74) Vertreter: Busse & Busse Patentanwälte

(56) Entgegenhaltungen:
- EP-A- 0 429 777
- GB-A- 663 219
- GB-A- 683 613
- US-A- 3 405 970

## Beschreibung

Die Erfindung betrifft ein Cabriolet-Fahrzeug, mit einem Faltverdeck, gemäß dem Oberbegriff des Anspruchs 1.

Bei bekannten Cabriolet-Fahrzeugen dieser Art (GB 683,613) weist das Faltverdeck zwei Gruppen von symmetrisch zur Fahrzeugslängsachse angeordneten, die Dachhaut randseitig untergreifenden und über ein jeweiliges Antriebsorgan bewegbare Klappgestängeteile auf. Auch gemäß GB 663,219 ist für eine automatische Bewegung des Falverddecks in Öffnung- bzw. Schließstellung ein Antriebszylinder vorgesehen, dessen Kolbenstange mit einem karosserieseitig abgestützten Schwenkhebel sowie einem unmittelbar an der Hauptsäule angreifenden Lenkhebel verbunden ist, so daß die drei Teile mit einem gemeinsamen Anlenkpunkt einen Kniehebelmechanismus bilden, der nur eine eingeschränkte Steuer- und Stellbewegung im Bereich der die Dachhaut untergreifenden Baugruppen ermöglicht.

Der Erfindung liegt die Aufgabe zugrunde, ein Cabriolet-Fahrzeug, mit einem Faltverdeck, zu schaffen, dessen automatischer Verdeckantrieb zur Bewegung der Klappgestängeteile mit konstruktiv einfachen Bauteilen so zusammenwirkt, daß diese bei insgesamt kompakter Anordnung einen geringen Bewegungsraum erfordern und das Faltverdeck in Schließstellung eine optisch ansprechende Aussteifung im heckseitigen Dachhautbereich aufweist.

Ausgehend von einem Cabriolet-Fahrzeug nach dem Oberbegriff des Anspruches 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 3 verwiesen.

Das Cabriolet-Fahrzeug weist ein Faltverdeck auf, dessen Klappgestängeteile im Bereich der Hauptsäule mit einer dreigliedrigen kinematischen Kette nach Art eines Kniehebelmechanismus als Antriebsbaueinheit so zusammenwirken, daß über nur einen karosserieseitig abgestützten Arbeitszylinder bzw. desssen einen Stellweg definierenden Arbeitskolben sowohl die Bewegungsfunktionen des gesamten Faltverdecks in die entsprechende Öffnungs- bzw. Schließstellung steuerbar sind als auch unter Vermeidung zusätzlicher Stellorgane eine Eckspriegelsteuerung derart möglich ist, daß eine optisch ansprechende und konturstraffende Dachhautformung über das gesamte Faltverdeck hinweg erreicht wird.

Bei der Antriebsbaugruppe wirken ein karosserieseitig abgestützter Schwenkhebel und ein an der Hauptsäule angreifender Lenkhebel in einer Gelenkverbindung derart mit dem einzigen Arbeitszylinder zusammen, daß die Klappgestängeteile und der die Dachhaut heckseitig untergreifende Eckspriegel gleichzeitig über eine kombinierte Schwenk-/Zugbewegung in die Öffnungsstellung bewegt werden. Für die Rückführung der Verdeckbauteile in die Schließstellung ist der Stellweg bzw. der Hub der Kolbenstange derart auf die geometrischen Verhältnisse im Bereich der Bauteile am Kniehebelgelenk und der Klappgestängeteile abgestimmt, daß diese eine über den Lenkhebel gesteuerte Bewegungsbahn durchlaufen, das Faltverdeck bis in seine Anlagestellung am oberen Windschutzscheibenrahmen bewegt und dabei der Eckspriegel unter dem heckseitigen Dachhautbereich so positioniert wird, daß dieser oberhalb des karosserieseitig festgelegten Spannbügels eine auch bei Fahrtwindbelastung hinreichend stabile und optisch ansprechende Spannkontur aufweist. In zweckmäßiger Ausführung sind dabei im Heckbereich der Dachhaut besondere Antriebsorgane für Sturmstangen, wie sonst vielfach üblich, entbehrlich.

Hinsichtlich wesentlicher weiterer Vorteile und Einzelheiten der Erfindung wird auf die nachfolgende Beschreibung und die Zeichnung verwiesen, in der zwei Ausführungsbeispiele des Cabriolet-Fahrzeugs mit dem Faltverdeck in erfindungsgemäßer Ausbildung schematisch näher veranschaulicht sind. In der Zeichnung zeigen:
- Fig. 1: eine Perspektivdarstellung eines Faltverdecks für ein Cabriolet-Fahrzeug in Einzeldarstellungen ohne Dachhaut,
- Fig. 2: eine Seitenansicht des Faltverdecks gemäß Fig. 1 in Schließstellung,
- Fig. 3: eine Seitenansicht ähnlich Fig. 2 mit dem Faltverdeck in einer Öffnungs- bzw. Schließphase,
- Fig. 4: eine Seitenansicht ähnlich Fig. 1 mit dem Faltverdeck in Öffnungsstellung,

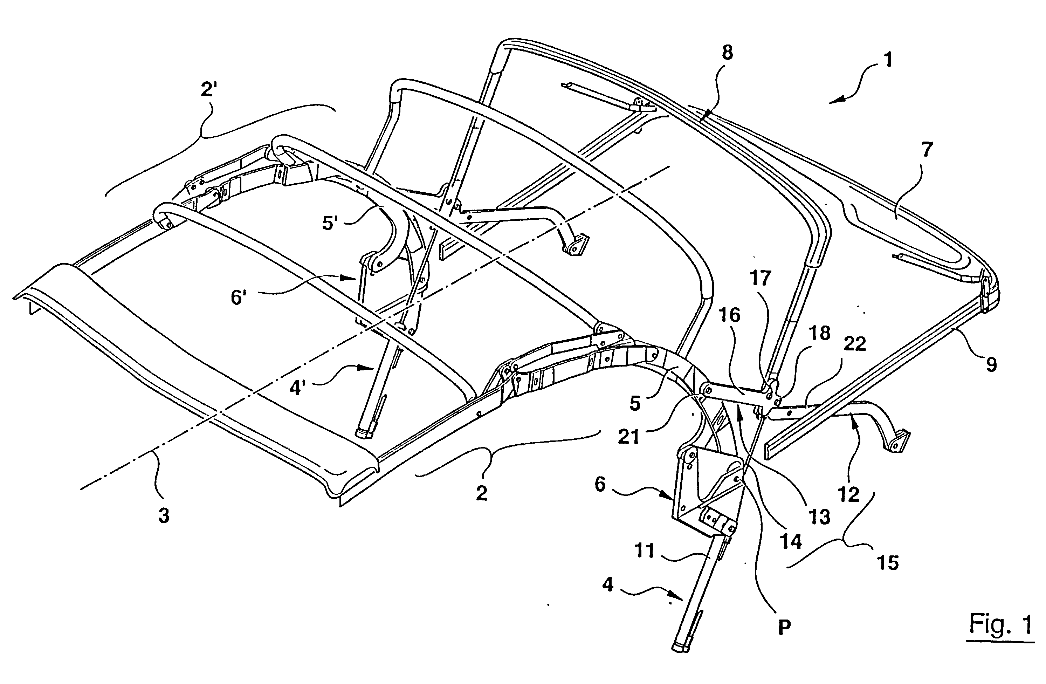

In Fig. 1 ist ein insgesamt mit 1 bezeichnetes Faltverdeck eines nicht näher dargestellten Cabriolet-Fahrzeugs dargestellt, wobei in dieser perspektivischen Ansicht zwei Gruppen von Klappgestängeteilen 2, 2' deutlich werden, die symmetrisch zur Fahrzeuglängsachse 3 angeordnet sind und eine nicht näher dargestellte Dachhaut randseitig untergreifen. In der nachfolgenden Beschreibung wird die Funktionsweise des erfindungsgemäßen Faltverdecks 1 im wesentlichen jeweils anhand der Klappgestängeteile 2 erörtert, wobei sich deren funktionaler Zusammenhang mit der Klappgestänge-Gruppe 2' über die entsprechende symmetrische Anordnung zur Fahrzeuglängsachse 3 ergibt und deshalb nicht in jedem Falle beide Klappgestängeteile 2, 2' beschrieben werden.

Die Klappgestängeteile 2, 2' sind über ein jeweiliges Antriebsorgan 4, 4' bewegbar, wobei die Klappgestängeteile 2, 2' jeweils heckseitig über ihre Hauptsäule 5, 5' an einem karosseriefesten Hauptlager 6, 6' abgestützt sind. Zwischen den beiden Hauptlagern 6, 6' erstreckt sich ein oberhalb einer Heckscheibe 7 verlaufender Eckspriegel 8 und unterhalb der Heckscheibe 7 ein den hinteren Dachhautrand (nicht dargestellt) erfassender Spannbügel 9 (Fig. 1).

Das Faltverdeck 1 weist als Antriebsorgan 4 im Bereich des jeweiligen Hauptlagers 6 nur einen karosserieseitig abgestützten Arbeitszylinder 11 auf, dessen Kolbenstange 14 mit einem karosserieseitig abgestützten Schwenkhebel 12 und einem unmittelbar an der Hauptsäule 5 angreifenden Lenkhebel 13 eine kinematische Kette 15 nach Art eines Kniehebelmechanismus bildet.

Mit dieser überaus einfachen Ausbildung der Faltverdeck-Antriebskinematik kann mit wenigen Bauteilen eine exakte Bewegungsteuerung der Klappgestängeteile 2 erreicht und insbesondere der Eckspriegel 8 in seiner Schließstellung (Fig. 1) derart positioniert werden, daß die heckseitige Dachhaut im Bereich der Heckscheibe 7 eine stabile und optisch ansprechende Spannkontur aufweist.

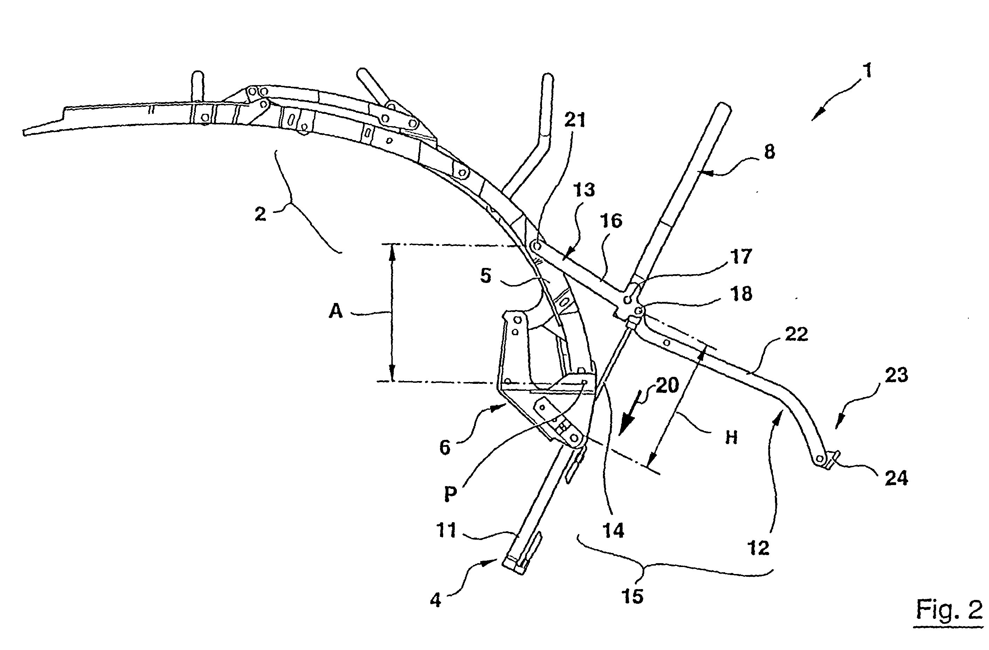

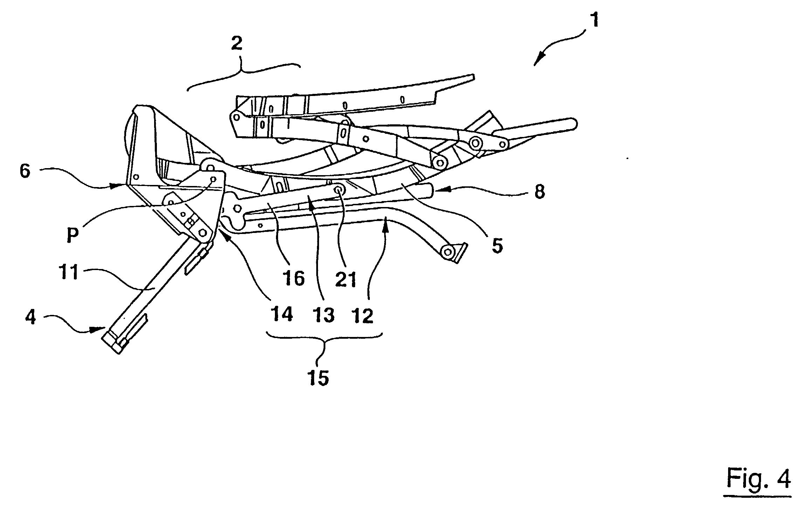

Die kinematische Kette 15 ist erfindungsgemäß im Bereich des Lenkhebels 13 mit einem Kreuzlenker 16 versehen, dessen zum Arbeitszylinder 11 hin gerichtetes Ende zumindest zwei Gelenkpunkte 17, 18 aufweist, an denen die Kolbenstange 14, der karosserieseitig abgestützte Schwenkhebel 12 und der Eckspriegel 8 so gekoppelt sind, daß bei Einleitung einer Zugbewegung (Pfeil 20, Fig. 2) eine synchrone Bewegung des Klappgestänges 2 aus einer Über-Totpunktstellung (Fig. 2) zu einer Öffnungsstellung (Fig. 4) hin eingeleitet wird.

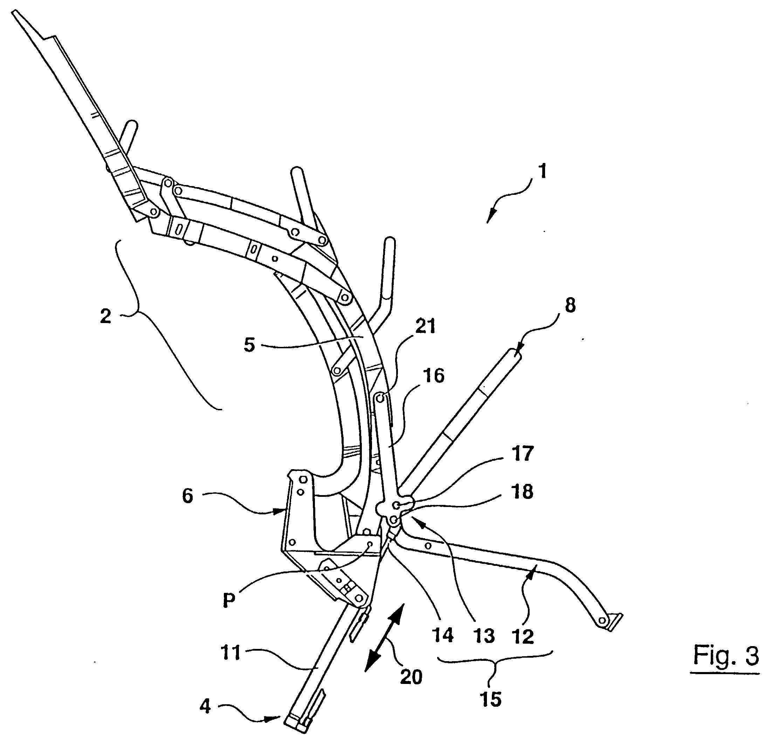

Die Kolbenstange 14, der Schwenkhebel 12 und der Kreuzlenker 16 weisen in zweckmäßiger Ausbildung den Gelenkpunkt 18 als eine gemeinsame Schwenkachse auf, so daß der Kreuzlenker 16 in diesem Verbindungsbereich in Pfeilrichtung 20 bewegt und gleichzeitig über ein Verbindungsgelenk 21 an der Hauptsäule 5 eine Schwenk-Zugbewegung auf das Klappgestänge 2 derart übertragen wird, daß die in Fig. 2 bis 4 dargestellten Bewegungsphasen synchron zur Bewegung der Kolbenstange 14 durchlaufen werden. Der Stellweg H der Kolbenstange 14 (Fig. 2) und der Abstand A des Verbindungsgelenkes 21 zum Hauptschwenkpunkt P im Bereich des Hauptlagers 6 sind dabei derart bemessen, daß das Klappgestänge 2 in jeder Bewegungsphase einen für die Dachhaut belastungsoptimalen Schwenkabstand zum Hauptlager 6 aufweist und das gesamte Faltverdeck überaus leichtgängig in die Öffnungs- bzw. Schließposition bewegt werden kann.

In der kinematischen Kette 15 am Faltverdeckantrieb 4, 4' ist der Schwenkhebel 12 als eine in Längsrichtung abgewinkelte Strebe 22 ausgebildet, die im Bereich ihrer karosserieseitigen Anbindung 23 über einen Gelenkbock 24 abgestützt ist, so daß im heckseitigen Fahrzeugbereich eine optimale Ausnutzung des engen Bewegungsraums erreicht ist.

In der Schließstellung des Faltverdecks 1 (Fig. 1) sind die Bauteile der kinematischen Kette 15 im Bereich der Verbindungsgelenke zwischen Lenkhebel 13, und Schwenkhebel 12, in eine Über-Totpunktstellung verbracht, so daß mit dem vorbeschriebenen Antriebskonzept für das Faltverdeck weitere Baugruppen, insbesondere in Form einer separaten Sturmstangensteuerung, entbehrlich sind und das Faltverdeck 1 zwischen den Klappgestängeteilen 2, und dem heckseitigen Spannbügel 8 formstabil in der Schließstellung gespannt ist.

## Patentansprüche

1. Cabriolet-Fahrzeug, mit einem Faltverdeck (1), mit zwei Gruppen von symmetrisch zur Fahrzeuglängsachse (3) angeordneten, eine Dachhaut randseitig untergreifenden und über ein jeweiliges Antriebsorgan (4, 4') bewegbaren Klappgestängeteilen (2; 2'), die jeweils heckseitig über eine Hauptsäule (5, 5') an einem karosseriefesten Hauptlager (6, 6') abgestützt sind, wobei sich quer zur Fahrzeuglängsache (6) zwischen diesen beiden Hauptlagern (6, 6') ein die Dachhaut untergreifender Eckspriegel (8) erstreckt, und das Antriebsorgan (4, 4') jeweils von einem karosserieseitig abgestützten Arbeitszylinder (11) gebildet ist, dessen Kolbenstange (14) mit einem karosserieseitig abgestützten Schwenkhebel (12) sowie einem unmittelbar an der Hauptsäule (5, 5') angreifenden Lenkhebel (13) verbunden ist, derart, daß die drei Teile (12, 13, 14) im Bereich von Gelenkpunkten nach Art eines Kniehebelmechanismus zusammenwirken, wobei der Kniehebelmechanismus im Bereich der Anlenkung der Kolbenstange (14) zumindest zwei Gelenkpunkte (17, 18) aufweist,
dadurch gekennzeichnet, daß der Lenkhebel (13) als ein mit den zwei Gelenkpunkten (17, 18) versehener Kreuzlenker (16) ausgebildet ist, an dem die Kolbenstange (14), der karosserieseitig abgestützte Schwenkhebel (12) und der Eckspriegel (8) gekoppelt sind.

2. Cabriolet-Fahrzeug nach Anspruch 1, dadurch gekennzeichnet, daß die Kolbenstange (14) und der Schwenkhebel (12) den gemeinsamen ersten Gelenkpunkt (18) am Kreuzlenker (16) bilden und dieser andererseits an der Hauptsäule (5) derart angelenkt ist, daß zu einer Hauptschwenkachse (P) der Hauptsäule (5) im Bereich des Hauptlagers (6) hin ein Schwenkabstand (A) definiert ist.

3. Cabriolet-Fahrzeug nach Anspruch 1 oder 2, dadurch gekennzeichnet, daß der Kreuzlenker (16) im Bereich des zweiten Gelenkpunktes (17) mit dem Eckspriegel (8) verbunden ist, derart, daß die Klappgestängeteile und der die Dachhaut untergreifende Eckspriegel (8) synchron in die Öffnungs- bzw. Schließstellung bewegbar sind.

## Claims

1. A cabriolet vehicle with a folding top (1), with two groups of folding linkage parts (2, 2') disposed symmetrically in relation to the longitudinal axis (3) through the vehicle and engaging under the edges of a roof skin and adapted for movement via a respective drive means (4, 4') while being supported on a main mounting (6, 6') which is with the body work whereby a corner strut (8) extends under the roof skin between the two main supports (6, 6') and crosswise to the longitudinal axis (6) (sic! 3?) through the vehicle, the respective drive means (4, 4') being constituted by a working cylinder (11) supported on the body work and of which the piston rod (14) is so connected to a pivot lever (12) braced on the body work and to a guide lever (13) which directly engages the main column (5, 5') that the three parts (12, 13, 14) co-operate in the area of points of articulation in the manner of a knee-lever mechanism, the knee-lever mechanism having in the region of the articulation of the piston rod (14) at least two articulating points (17, 18), characterised in that the guide lever (13) is constructed as a cross link (16) provided with the two articulation points (17, 18) and to which the piston rod (14), the pivot lever (12) braced on the body work and the comer brace (8) are coupled.

2. A cabriolet vehicle according to claim 1, characterised in that the piston rod (14) and the pivot lever (12) constitute the joint first articulation point (18) on the cross link (16) while this latter is on the other hand so articulated on the main column (5) that a pivoting gap (A) is defined in respect of a main pivot axis (P) of the main column (5) in the region of the main mounting (6).

3. A cabriolet vehicle according to claims 1 or 2, characterised in that the cross link (16) is connected to the comer brace (8) in the region of the second articulation point (17) so that the folding linkage parts and the comer brace (8) which engages under the roof skin are adapted for synchronised movement into the opening and/or closing positions.

## Revendications

1. Véhicule convertible de type cabriolet équipé d'une capote pliante (1) comportant :
- deux groupes, symétriques par rapport à l'axe longitudinal (3) du véhicule, d'éléments de tringlerie basculante (2, 2') en prise par dessous avec le bord de la peau du toit, mobiles chacun sous l'action d'un organe d'entraînement (4, 4') et en appui chacun, vers l'arrière, par une colonne principale (5, 5') sur un palier principal (6, 6') fixé à la carrosserie,
- s'étendant transversalement à l'axe longitudinal (3) de véhicule, entre les deux paliers principaux (6, 6'), un arceau d'angle (8) en prise par dessous avec la peau du toit,
- l'organe d'entraînement (4, 4') étant constitué par un vérin du travail (11) en appui sur la carrosserie et dont le piston a sa tige (14) reliée à un levier pivotant (12) en appui sur la carrosserie et à un levier de commande (13) directement en prise avec la colonne principale (5, 5'), de sorte que les trois parties (12, 13, 14) dans la zone des points d'articulation interagissent à la manière d'un mécanisme à genouillère qui, dans la zone de l'articulation de la tige (14) présente au moins deux points d'articulation (17, 18),
caractérisé en ce que
le levier de commande (13) est constitué par une bielle en croix (16) présentant les deux points d'articulation (17, 18), et la tige (14) du piston, le levier pivotant (12) en appui sur la carrosserie et l'arceau d'angle (8) sont accouplés à cette bielle.

2. Véhicule selon la revendication 1,
caractérisé en ce que
la tige (14) du piston et le levier oscillant (12) constituent le premier point d'articulation (18) sur la bielle en croix (16), qui elle-même est articulée à la colonne principale (5) de manière à définir, par rapport à un axe principal de pivotement (P) de la colonne principale (5), dans la zone du palier principal (6), une distance de pivotement (A) .

3. Véhicule selon les revendications 1 ou 2,
caractérisé en ce que
la bielle en croix (16) est, dans la zone du second point d'articulation (17), reliée à l'arceau d'angle (8) de manière que les éléments de la tringlerie rabattable et l'arceau d'angle (8) en prise par dessous avec la peau du toit se déplacent en synchronisme pour atteindre la position d'ouverture ou de fermeture.
